# FASCICULE DE BREVET EUROPEEN

(11) **EP 4 107 381 B1**
(45) Date de publication et mention de la délivrance du brevet: **20.12.2023**
(21) Numéro de dépôt: 21708286.6
(22) Date de dépôt: 15.02.2021
(51) Int. Cl.: F02C 7/06, F02K 3/04, F01D 25/18, F01D 9/06

(54) **REMPLISSAGE D'UN RÉSERVOIR DE LUBRIFIANT D'UNE TURBOMACHINE D'AÉRONEF**
FÜLLEN EINES SCHMIERMITTELTANKS EINES FLUGZEUGTURBINENMOTORS
FILLING AN AIRCRAFT TURBINE ENGINE LUBRICANT TANK

(30) Priorité: 21.02.2020 FR 2001751
(43) Date de publication de la demande: 28.12.2022
(73) Titulaire: SAFRAN AIRCRAFT ENGINES, 75015 Paris (FR)
(72) Inventeur: BERGO, Claire Alexia, 77550 MOISSY-CRAMAYEL (FR)
(74) Mandataire: Gevers & Orès
(86) Numéro de dépôt international: PCT/FR2021/050264
(87) Numéro de publication internationale: WO 2021/165606

(56) Documents cités:
- FR-A1- 3 072 425
- FR-A1- 3 079 873
- FR-A1- 3 082 552

## Description

### Domaine technique de l'invention

La présente invention concerne notamment une turbomachine d'aéronef comportant un réservoir de lubrifiant ainsi qu'un procédé de remplissage en lubrifiant de ce réservoir.

### Arrière-plan technique

De manière classique, une turbomachine à double flux comprend un générateur de gaz entouré par une nacelle. Une soufflante est située à l'amont du générateur de gaz et génère un flux de gaz qui se sépare en un flux primaire qui s'écoule à l'intérieur du générateur de gaz (à travers des étages de compression, une chambre de combustion, et des étages de turbine), et en un flux secondaire qui s'écoule entre le générateur de gaz et la nacelle.

Une turbomachine est équipée d'au moins un réservoir de lubrifiant pour l'alimentation en lubrifiant, et en particulier en huile, notamment de paliers de la turbomachine.

Le réservoir de lubrifiant est en général installé dans un compartiment de la nacelle, c'est-à-dire un compartiment délimité extérieurement par un capotage extérieur de la nacelle. Ce compartiment de la nacelle est délimité intérieurement par un carter moteur extérieur, formé par exemple par l'assemblage d'un carter de soufflante (dit « carter *fan »* par anglicisme) avec une virole extérieure de carter intermédiaire aussi dénommée VCI, lequel carter entoure le générateur de gaz et délimite extérieurement la veine d'écoulement du flux secondaire. L'espace généralement annulaire entre le capotage extérieur de la nacelle et le carter moteur formé par la VCI avec le carter de soufflante est appelé compartiment de soufflante (ou compartiment fan) et permet de stocker plusieurs équipements de la turbomachine tels que le réservoir précité qui est relativement volumineux. Le positionnement du réservoir dans cet espace facilite l'accès au réservoir puisqu'il suffit de prévoir une trappe d'accès direct sur le capotage ou de démonter une partie du capotage, pour avoir accès au réservoir, par exemple en vue d'une opération de maintenance telle que le remplissage du réservoir.

Sur les architectures du futur, la recherche d'une réduction de la consommation de carburant par les moteurs pousse à s'orienter vers une augmentation du taux de dilution des moteurs. C'est le cas sur l'avant-projet de moteur appelé UHBR (acronyme de l'anglais *Ultra High By-pass Ratio*) dont le diamètre de soufflante est largement augmenté par rapport à un moteur classique. L'accroissement du diamètre de soufflante induit une augmentation des dimensions de la nacelle et donc des pertes aérodynamiques induites par celle-ci (surface frontale et surface mouillée augmentées). L'affinement des lignes de la nacelle est donc particulièrement important pour ce type d'architecture moteur. L'abaissement de la hauteur entre le capotage extérieur de la nacelle et le carter moteur formé par l'assemblage de la VCI avec le carter de la soufflante, c'est-à-dire la diminution de l'épaisseur radiale du compartiment de soufflante, nécessite de déplacer les équipements volumineux de ce compartiment vers d'autres positions de la turbomachine.

Des études ont montré qu'il y a un fort intérêt à mettre le réservoir de lubrifiant dans le compartiment moteur du générateur de gaz, c'est-à-dire le compartiment (ou espace) inter-veines situé entre les veines primaire et secondaire de la turbomachine à double flux, et en particulier dans une zone amont de ce compartiment moteur appelée compartiment « *booster »* du fait qu'il est situé sensiblement au droit du compresseur basse pression (en anglais *booster*) de la turbomachine. Un premier avantage est lié au fait que le réservoir est situé au plus près du groupe de lubrification de la turbomachine, et limite donc la longueur du routage de l'huile entre ces éléments. Un autre avantage est lié au fait que le compartiment booster est plus frais et moins encombré que le reste du compartiment moteur. En comparaison avec une zone en aval du moteur, notamment une zone au voisinage des turbines, la température environnante dans le compartiment booster est plus favorable à l'utilisation de capteurs électroniques de niveau d'huile dans le réservoir. Cet environnement thermique participe également à une conception moins encombrante et moins coûteuse du réservoir et de ses pièces de supportage, en comparaison avec le reste de l'espace inter-veines (aussi appelé zone *Core*) dans une turbomachine à double flux.

Le problème lié à l'environnement de cette installation dans le compartiment moteur réside dans le fait que le réservoir de lubrifiant doit être alimenté depuis l'extérieur, « sous aile », par un technicien de maintenance.

Dans le cas d'un réservoir dit « classique », c'est-à-dire équipé d'un orifice de remplissage localisé sur lui-même, l'opération de remplissage est complexe car le réservoir situé dans le compartiment moteur est difficilement accessible. En effet, en raison de sa position interne à la turbomachine, le réservoir et son orifice de remplissage sont situés à l'intérieur de plusieurs couches coaxiales, telles qu'un capot de soufflante, des capots d'inverseur de poussée (potentiellement fixes sur les architectures UHBR), une virole extérieure du carter intermédiaire (aussi appelée VCI), et des capotages du kit moteur (ou de l'anglais *kit engine*)*,* partie la plus centrale de l'environnement.

Comme l'opération de remplissage doit s'effectuer dans un temps très court, et que l'ouverture des capots de soufflante et des inverseurs de poussée ne sont pas prévus pour ce genre d'opération, l'accès à l'orifice de remplissage dans un tel cas de figure est problématique. Le nombre de « couches » et le fort diamètre d'un UHBR rendent difficile d'atteindre le réservoir depuis l'extérieur. De plus, l'opération de remplissage doit pouvoir s'effectuer à l'aveugle, c'est-à-dire que l'opérateur peut avoir à verser une quantité d'huile prédéterminée sans nécessairement avoir accès à une indication du niveau de remplissage.

Dans le document FR-A1-3 072 425, la Demanderesse a proposé une solution qui permet de remplir le réservoir situé à l'intérieur de la turbomachine, sans ouvrir les capots constituant la nacelle. L'état de l'art comprend en outre les documents FR-A1-3 082 552 et FR-A1-3 079 873. La présente invention propose une alternative simple, efficace et économique pour résoudre le problème précité.

### Résumé de l'invention

L'invention propose une turbomachine à double flux, comprenant :
- un générateur de gaz,
- une nacelle qui entoure le générateur de gaz,
- des bras de liaison du générateur de gaz à la nacelle,
- une veine annulaire d'écoulement d'un flux primaire qui est formée dans le générateur de gaz et qui est délimitée extérieurement par un premier carter annulaire du générateur de gaz,
- une veine annulaire d'écoulement d'un flux secondaire qui est formée entre le générateur de gaz et la nacelle et qui est délimitée intérieurement par un second carter annulaire du générateur de gaz et extérieurement par un troisième carter annulaire entouré par la nacelle, les deuxième et troisième carters étant reliés ensemble par au moins certains desdits bras,
- au moins un réservoir de lubrifiant situé dans un espace annulaire s'étendant entre les premier et deuxième carters,
- au moins une trappe prévue sur un capotage extérieur de la nacelle, pour le remplissage dudit réservoir,
caractérisée en ce que ledit réservoir est configuré pour être rempli par l'intermédiaire d'une canne tubulaire amovible insérée depuis ladite trappe jusqu'au réservoir, ledit troisième carter comportant une première interface configurée pour être traversée par ladite canne, et ledit deuxième carter comportant une seconde interface de raccordement de la canne audit réservoir.

L'invention propose ainsi une solution simple pour remplir un réservoir de lubrifiant situé dans le compartiment moteur. Ce remplissage est réalisé au moyen d'une canne. Une canne de remplissage a une forme allongée et est tubulaire. Elle a une extrémité proximale équipée par exemple d'un entonnoir dans laquelle est versée du lubrifiant, contenue par exemple dans une cannette. Elle a également une extrémité distale qui est destinée à être raccordée au réservoir en vue de l'écoulement par gravité du lubrifiant à travers la canne et jusqu'au réservoir. La canne traverse plusieurs couches comme évoqué dans ce qui précède. Elle traverse d'une part une trappe de la nacelle, qui peut être de faibles dimensions compte tenu de la section relativement réduite de la canne. La canne traverse ensuite une première interface du troisième carter afin de passer à travers la veine secondaire, c'est-à-dire la veine du flux secondaire de la turbomachine à double flux. Ce troisième carter peut être une virole du carter intermédiaire. La canne parvient alors jusqu'à la seconde interface en vue du raccordement fluidique de la canne au réservoir. La seconde interface est située sur le deuxième carter qui peut être un panneau du kit moteur de la turbomachine. La canne est amovible et est retirée après chaque remplissage.

Un des avantages de l'invention est que la veine d'écoulement du flux secondaire n'est pas impactée après remplissage du réservoir et retrait de la canne. La première interface permet de guider la canne lors de son insertion et la seconde interface assure le raccordement fluidique au réservoir sans risque de fuite dans la veine.

La turbomachine selon l'invention peut comprendre une ou plusieurs des caractéristiques suivantes, prises isolément les unes des autres ou en combinaison les unes avec les autres :
- lesdites première et seconde interfaces sont situées directement dans ladite veine d'écoulement du flux secondaire ;
- ladite première interface comprend un système de guidage télescopique comportant plusieurs éléments montés coaxialement et de manière coulissante les uns dans les autres, ce système étant apte à être traversé par la canne et à adopter une première position rétractée dans laquelle il a une longueur ou épaisseur minimale et n'est pas en saillie dans la veine d'écoulement du flux secondaire, et une seconde position déployée dans laquelle il a une longueur ou épaisseur maximale et est en saillie dans la veine d'écoulement du flux secondaire en direction du second interface ;

- ladite seconde interface comprend un dispositif de raccordement comportant :
   - un embout configuré pour coopérer par emboîtement mâle-femelle avec un embout complémentaire d'une extrémité distale de la canne, et
   - un mécanisme d'ouverture du réservoir lorsque l'emboîtement est effectif ;
- ledit mécanisme d'ouverture comprend au moins une partie mobile depuis une position de fermeture jusqu'à une position d'ouverture du réservoir, la partie mobile étant sollicitée par un organe élastique dans sa position de fermeture et étant amenée jusqu'à sa position d'ouverture par ledit emboîtement mâle-femelle ;
- ladite seconde interface comprend un élément de guidage et de verrouillage configuré pour coopérer par effet baïonnette avec un élément complémentaire de l'embout de la canne ;
- la trappe est située en amont de capots d'inverseur de poussée de la turbomachine ;
   -- le réservoir a une forme générale incurvée et s'étend en partie autour d'un axe longitudinal de la turbomachine ;
   -- le ou chaque réservoir est situé sensiblement au droit d'un compresseur basse pression du générateur de gaz.

La présente invention concerne également un ensemble comportant une turbomachine telle que décrite ci-dessus et une canne tubulaire amovible de remplissage du réservoir, cette canne étant configurée pour traverser ladite première interface et pour être raccordée au réservoir via ladite seconde interface.

Avantageusement, la canne comprend une extrémité distale équipée d'un embout configuré pour coopérer par emboîtement mâle-femelle avec un embout complémentaire de la seconde interface, cet embout étant équipé d'un dispositif d'obturation agencé pour ouvrir l'extrémité distale de la canne lorsque cet emboîtement est effectif et pour fermer ladite extrémité distale lorsque ledit embout et ledit embout complémentaire sont désemboîtés l'un de l'autre.

La canne comprend de préférence au moins un organe mobile entre une position rétractée le long de la canne, et une position déployée en saillie sur la canne, cet organe mobile étant apte à coopérer avec ledit système afin de le forcer à se rétracter lors d'un retrait de la canne de la turbomachine. Dans un mode de réalisation, ladite première interface est formée par une ouverture ménagée dans ledit troisième carter, ladite trappe comprend un organe mobile de fermeture de la trappe muni d'un obturateur agencé pour fermer ladite ouverture quand la trappe est fermée, et la canne est associée à un système de guidage agencé pour être installé à l'emplacement de la trappe une fois celle-ci ouverte et pour être désinstallé une fois le réservoir rempli.

La présente invention concerne également un procédé de remplissage d'un réservoir de lubrifiant dans une turbomachine d'aéronef, au moyen d'un ensemble tel que décrit ci-dessus, dans laquelle il comprend les étapes de :
- ouverture de la trappe de la nacelle,
- insertion de la canne à travers la trappe puis à travers la première interface,
- passage de la canne dans la veine d'écoulement du flux secondaire jusqu'à la seconde interface en vue du raccordement de la canne au réservoir, et
- écoulement de lubrifiant depuis une extrémité proximale de la canne située à l'extérieur de la turbomachine jusqu'à une extrémité distale de la canne et jusqu'au réservoir.

### Brève description des figures

L'invention sera mieux comprise et d'autres détails, caractéristiques et avantages de l'invention apparaîtront à la lecture de la description suivante faite à titre d'exemple non limitatif et en référence aux dessins annexés dans lesquels :
[Fig.1] la figure 1 est une vue très schématique de face d'une turbomachine,
[Fig.2] la figure 2 est une vue très schématique en coupe axiale d'une turbomachine,
[Fig.3] la figure 3 est une vue schématique en perspective d'un ensemble propulsif,
[Fig.4] la figure 4 est une vue schématique partielle en perspective d'une turbomachine comportant l'ensemble propulsif de la figure 3,
[Fig.5] la figure 5 est une vue très schématique en coupe des différentes couches qu'une canne de remplissage doit traverser pour atteindre un réservoir de lubrifiant situé dans le compartiment moteur d'une turbomachine,
[Fig.6] la figure 6 est une vue similaire à la figure 5 et montrant une étape d'un procédé de remplissage du réservoir, consistant à insérer la canne à travers une trappe puis une première interface,
[Fig.7] la figure 7 est une vue similaire à la figure 5 et montrant une autre étape d'un procédé de remplissage du réservoir, consistant à raccorder la canne à une seconde interface et au réservoir,
[Fig.8] la figure 8 est une vue très schématique à plus grande échelle du raccordement de la canne et du réservoir,
[Fig.9-11] les figures 9 à 11 sont des vues similaires à celle de la figure 8 et montrant des étapes de remplissage du réservoir,
[Fig.12] la figure 12 est une vue similaire à celle de la figure 5 et illustre une variante de réalisation de la canne de remplissage,
[Fig.13-15] les figures 13 à 15 sont des vues similaires à celle de la figure 12 et montrant des étapes de retrait de la canne, après remplissage du réservoir, et de rangement de la première interface,
[Fig.16] la figure 16 est une vue similaire à la figure 8 et montrant une variante de réalisation du raccordement fluidique entre la canne et la seconde interface,
[Fig. 17] la figure 17 est une vue très schématique d'un profil optimisé en coupe d'un renfoncement d'un carter
[Fig.18] la figure 18 est une vue similaire à celle de la figure 5 et montrant une variante de réalisation de l'invention,
[Fig. 19] la figure 19 est une autre vue de la variante de la figure 18 et montre une étape d'un procédé de remplissage d'un réservoir, consistant à insérer la canne à travers une trappe puis une première interface, et
[Fig.20] la figure 20 est une vue de la variante de la figure 18 et montre une autre étape du procédé de remplissage du réservoir, consistant à raccorder la canne à une seconde interface et au réservoir.

### Description détaillée de l'invention

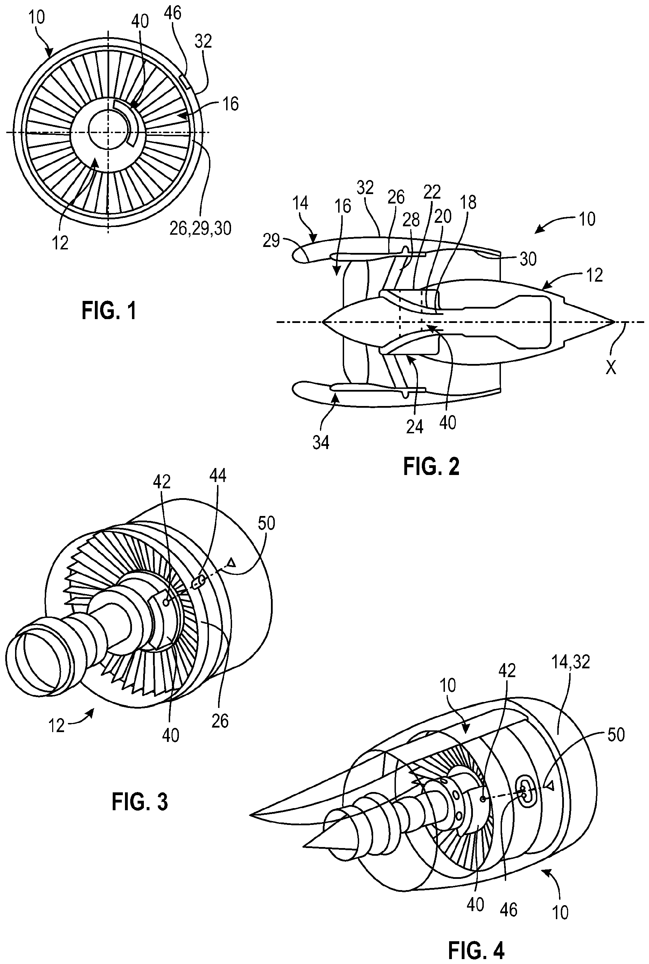

Les figures 1 et 2 montrent de manière schématique une turbomachine 10 d'aéronef du type à double flux. La turbomachine 10 comprend essentiellement deux parties à savoir un générateur de gaz 12 qui a une forme générale allongée le long d'un axe longitudinal X, et une nacelle 14 qui entoure le générateur de gaz 12.

Le générateur de gaz 12 n'est pas illustré dans le détail. Classiquement, il comprend deux corps tournants à savoir un corps basse pression (BP) et un corps haute pression (HP). Chaque corps comprend un rotor de compresseur et un rotor de turbine. Le générateur de gaz comprend, d'amont en aval, dans le sens d'écoulement des gaz, un compresseur BP, un compresseur HP, une chambre de combustion, une turbine HP et une turbine BP. Les rotors du compresseur HP et de la turbine HP sont reliés entre eux par un arbre HP pour former le corps HP, les rotors du compresseur HP et de la turbine HP étant situés respectivement en amont et en aval de la chambre de combustion. Les rotors du compresseur BP et de la turbine BP sont reliés entre eux par un arbre BP pour former le corps BP, les rotors du compresseur BP et de la turbine BP étant situés respectivement en amont du compresseur HP et en aval de la turbine HP. L'arbre BP entraîne en outre, soit directement soit par l'intermédiaire d'un réducteur, un rotor de soufflante 16 qui est situé du côté amont du générateur de gaz.

Le générateur de gaz 12 comprend une veine d'écoulement d'un flux primaire ou flux chaud, qui traverse les compresseurs, la chambre de combustion, et les turbines. Cette veine dite veine primaire est en général délimitée intérieurement et extérieurement par des carters annulaires 18, 20 entre lesquels s'étendent notamment des aubes des compresseurs et des turbines. Le carter annulaire 20 qui délimite extérieurement cette veine est lui-même entouré à distance par un carter annulaire 22 qui délimite intérieurement la veine secondaire de la turbomachine 10 à double flux. Ce carter annulaire 22 peut consister en des capots et/ou des panneaux. Les carters 20 et 22 sont à distance radiale l'un de l'autre et définissent entre eux un espace annulaire 24 appelé espace inter-veines ou encore compartiment moteur. Les carters 20, 22 peuvent former au niveau des compresseurs BP et HP un ensemble appelé couramment moyeu de carter intermédiaire.

Le générateur de gaz 12 est entouré par un carter annulaire 26 de soufflante, qui s'étend autour du rotor de soufflante 16 et est relié rigidement au générateur de gaz, au niveau du carter 22, par une rangée annulaire de bras tubulaires 28 sensiblement radiaux. Ces bras peuvent être ceux couramment appelés grille d'OGV (acronyme de l'anglais *Outlet Guide Vane*)*.*

Sur la figure 2, par souci de simplification, le carter annulaire 26 a été désigné comme englobant également la VCI, c'est-à-dire la virole extérieure de carter intermédiaire. Dans la présente, le carter 26 désigne également le regroupement du carter de soufflante avec la VCI.

L'ensemble comportant le générateur de gaz 12, le rotor de soufflante 16, le carter 26 et les bras 28, forme la partie moteur de la turbomachine. Le carter 26 supporte la nacelle qui comprend des capots annulaires 29, 30 s'étendant en amont et en aval du carter 26, dans le prolongement de ce dernier, ainsi qu'un capotage annulaire externe 32 qui s'étend autour des carters 26, 29, 30. Le capotage 32 s'étend à distance radiale des carters 26, 29, 30 et délimite avec eux un espace annulaire appelé compartiment nacelle 34.

Dans la technique actuelle, un réservoir de lubrifiant, et en particulier d'huile, par exemple pour la lubrification de paliers de la turbomachine 10, est monté dans le compartiment nacelle 34. Le réservoir est donc accessible à l'intérieur du compartiment nacelle, par démontage d'un panneau du capotage 32 par exemple, en vue de son remplissage et en vue également de connaître son niveau d'huile.

L'invention propose de positionner le réservoir de lubrifiant 40 dans le compartiment moteur 24, comme cela est schématiquement représenté aux figures 1 et 2. Dans l'exemple représenté, il est situé entre les carters 20, 22, sensiblement au droit d'un compresseur, par exemple BP, et/ou au droit des bras 28. Dans l'exemple particulier de réalisation représenté (cf. figure 2), il est situé dans un plan transversal passant sensiblement par les extrémités radialement externes des bras 28, qui s'étendent d'amont en aval radialement vers l'extérieur. Le réservoir 40 a ici une forme générale incurvée (cf. figure 1) épousant ainsi globalement la forme du compartiment moteur 24 disponible dans ce plan.

Les figures 3 et 4 montrent des caractéristiques de l'invention. Le réservoir 40 est rempli par l'intermédiaire d'une canne tubulaire 50 amovible qui est insérée à travers une trappe 46 et une première interface 44, jusqu'à parvenir à une seconde interface 42 de raccordement fluidique au réservoir 40.

La trappe 46 est située sur un capotage externe 32 de la nacelle 14, de préférence juste en amont de capots d'inverseurs de poussée. Cette trappe 46 comprend par exemple un volet 46a monté articulé par une charnière sur un panneau du capotage 32, et déplaçable entre une position de fermeture d'une ouverture de la trappe et une position de libre accès à cette ouverture. Le volet 46a de la trappe 46 peut être muni d'une liaison de type ressort pour le rappel du volet vers sa position de fermeture Il peut s'ouvrir par exemple sur simple pression de la canne 50, et se refermer au retrait de la canne. L'interface 42 est située sur le carter 22 et communique directement avec l'orifice de remplissage du réservoir 40.

L'interface 44 est située sur le carter 26.

La canne 50 a une forme allongée et est tubulaire et comprend une extrémité proximale équipée par exemple d'un entonnoir dans laquelle est versée du lubrifiant, contenue par exemple dans une cannette. Elle a également une extrémité distale qui est destinée à être raccordée au réservoir 40 en vue de l'écoulement par gravité du lubrifiant à travers la canne et jusqu'au réservoir. La canne 50 est donc insérée et positionnée dans la turbomachine 10 de façon à ce que l'huile puisse s'écouler par gravité depuis son extrémité proximale jusqu'à son extrémité distale et le réservoir 40.

L'angle de la canne 50 lors du remplissage, par rapport à l'axe longitudinal X de la turbomachine, dépend d'une part de la pente nécessaire à l'écoulement de l'huile lors du remplissage (par exemple de l'ordre de 4° environ), ainsi que de l'angle de roulis de l'aéronef équipée de la turbomachine, qui est par exemple de l'ordre de 6° environ. L'angle global entre la canne 50 et l'axe X est par exemple de 10° dans cet exemple. Du fait de cet angle relativement important, la canne ne peut pas transiter à travers un des bras 28 car il devrait pour cela être surdimensionné.

La solution est donc de faire passer la canne 50 à travers des interfaces 42, 44 situés ou débouchant directement dans la veine d'écoulement du flux secondaire.

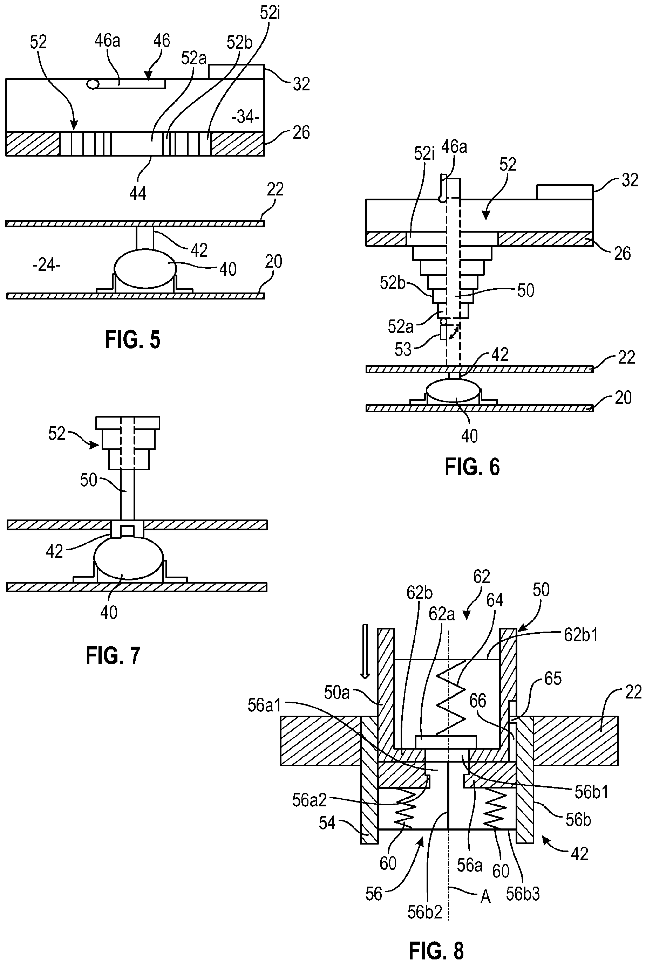

La figure 5 est une vue en coupe du capot 32 et des carters 22, 26, ainsi que des interfaces 42, 44.

Dans l'exemple représenté, l'interface 44 est destinée à être traversée par la canne 50 et comprend un système 52 de guidage télescopique comportant plusieurs éléments 52a, 52b, ..., 52i montés coaxialement et de manière coulissante les uns dans les autres. L'élément 52a est le plus petit élément qui se situe au centre du système 52, et l'élément 52i est le plus grand élément qui se situe à la périphérie du système 52.

En variante, le système 52 pourrait être intégré à la trappe 46.

Le système 52 est apte à adopter une première position rétractée, représentée à la figure 5, dans laquelle il a une longueur ou épaisseur minimale, mesurée dans une direction radiale par rapport à l'axe X, et n'est pas en saillie dans la veine d'écoulement du flux secondaire. Cette épaisseur peut être similaire à celle du carter 26. Dans le cas où l'épaisseur du système serait supérieure à celle du carter 26, l'extrémité radialement interne du système serait alignée avec la surface interne du carter 26 et l'extrémité radialement externe du système serait située dans le compartiment nacelle. Le système 52 est apte à adopter une seconde position déployée, visible à la figure 6, dans laquelle il a une longueur ou épaisseur maximale et est en saillie dans la veine d'écoulement du flux secondaire en direction de l'autre interface 42. Le nombre d'éléments 52a, 52b, ..., 52i du système 52 est par exemple compris entre 3 et 10.

L'interface 42, mieux visible à la figure 8, comprend un dispositif de raccordement comportant :
- un embout 54 configuré pour coopérer par emboîtement mâle-femelle avec un embout 50a complémentaire d'une extrémité distale de la canne 50, et
- un mécanisme d'ouverture 56 du réservoir 40 lorsque l'emboîtement est effectif.

On comprend que l'interface 42 au niveau du carter 22 et l'orifice de remplissage du réservoir 40 sont communalisés, ce qui est avantageux pour faciliter le guidage de la canne 50 et limiter la masse et l'encombrement de cette interface.

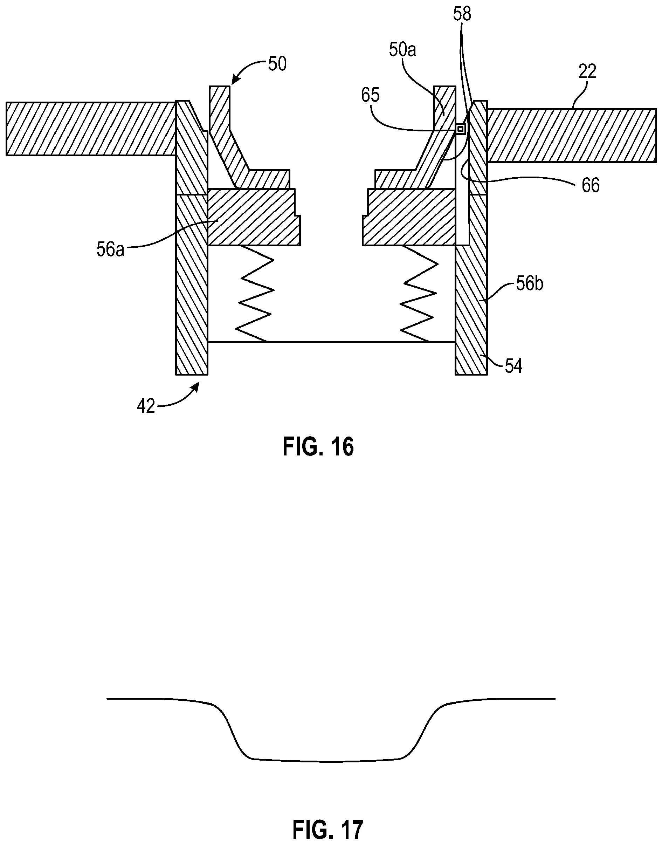

Dans l'exemple représenté, la canne 50 comprend un embout mâle 50a qui est engagé dans un embout femelle 54 de l'interface 42. Ces embouts peuvent avoir une forme générale cylindrique ou comprendre des extrémités libres comportant des surfaces tronconiques 58 complémentaires, comme cela est visible à la figure 16, pour faciliter le centrage et le guidage des embouts l'un dans l'autre. Par souci de simplification de la figure 16, le mécanisme d'ouverture 56 du réservoir 40 et le dispositif d'obturation 62 de la canne 50 ne sont pas représentés sur cette figure.

Lorsque la canne 50 est retirée, du fait du renfoncement de l'interface 42, il peut subsister un léger renfoncement dans cette interface, qui génère une certaine perturbation dans l'écoulement du flux d'air le long du carter 22. Une forme optimisée de ce renfoncement est représentée à la figure 17.

Avec des embouts par exemple tels que représentés sur la figure 16, une configuration de turbomachine dans laquelle la première interface 44 ne comprendrait pas un système 52 de guidage télescopique de la canne est envisageable, puisque les embouts peuvent être légèrement décentrés l'un par rapport à l'autre lors de leur approche. Le système de guidage de la canne 50 peut être ainsi moins précis que celui pouvant être obtenu par un guidage télescopique, le défaut de centrage étant rattrapé lors de l'emboîtement grâce à la forme des deux embouts qui facilite le centrage et le guidage de l'un dans l'autre.

Par exemple, il est envisageable de prévoir un système de guidage associant d'une part un orifice de passage de la canne 50 dans l'interface 44 destinée à être traversée par la canne et d'autre part un orifice de passage de la canne disposé dans la nacelle sous la trappe 46.

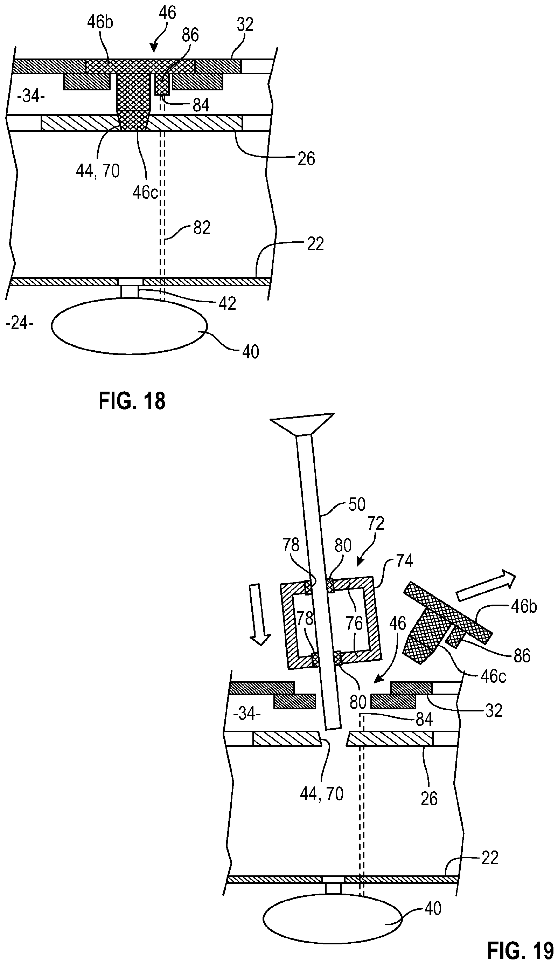

Il est en outre envisageable de prévoir un système de guidage indépendant de l'interface 44 et qui utilise un dispositif rapporté sur la nacelle. Un tel système de guidage peut être installé à un emplacement dégagé par l'ouverture de la trappe 46 préalablement à la mise en place de la canne 50 pour le remplissage, et est donc destiné à être retiré après le retrait de la canne. Un exemple d'une telle réalisation est décrit plus loin en référence aux figures 18 à 20.

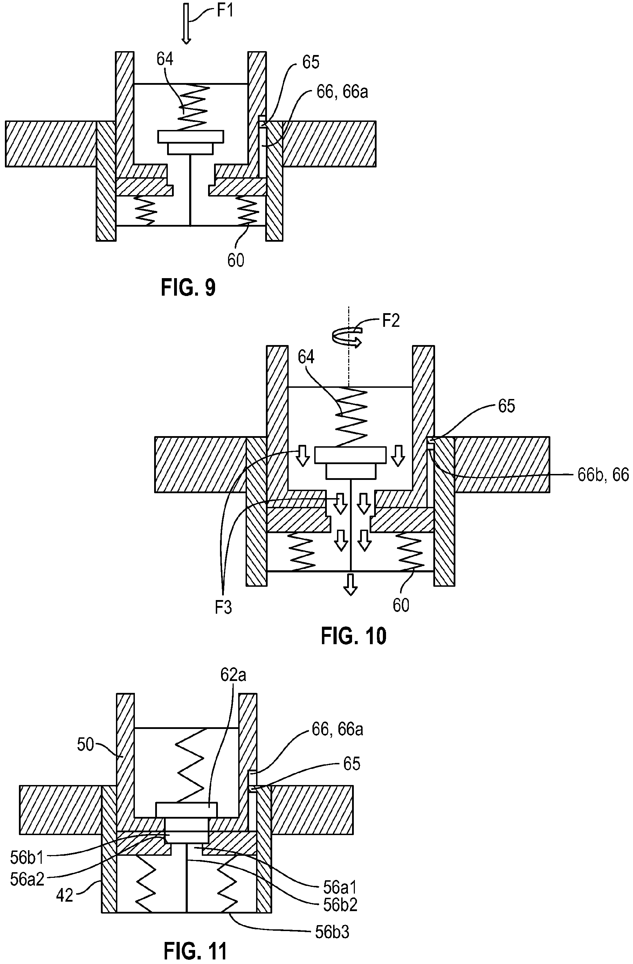

Le mécanisme d'ouverture 56 du réservoir 40 comprend au moins une partie mobile 56a depuis une position de fermeture visible à la figure 8 jusqu'à une position d'ouverture du réservoir 40 visible à la figure 9. La partie mobile 56a est sollicitée par un organe élastique 60, tel qu'un ou plusieurs ressorts, dans sa position de fermeture et est amenée jusqu'à sa position d'ouverture du fait de l'emboîtement des embouts.

Comme dans l'exemple représenté, l'extrémité distale de la canne 50 peut également comprendre un dispositif d'obturation 62 sous la forme d'un mécanisme d'ouverture similaire au mécanisme d'ouverture 56 du réservoir. Ce dispositif d'obturation 62 et le mécanisme 56 sont avantageusement destinés à être actionnés simultanément.

Dans ce cas, le mécanisme d'ouverture 56 comprend une partie fixe 56b vis-à-vis de laquelle la partie 56a est mobile. La partie fixe 56b coopère par appui, lors de l'emboîtement mâle-femelle, avec une partie mobile 62a du dispositif d'obturation 62 de la canne 50 pour la déplacer d'une position de fermeture représentée à la figure 8 jusqu'à une position d'ouverture représentée à la figure 9. Cette position de fermeture est une position de repos du fait qu'un organe élastique 64, tel qu'un ou des ressorts, sollicite la partie mobile 62a de la canne dans cette position. L'organe 64 s'étend entre la partie mobile 62a et un support 62b1 fixe de la canne 50. Lors de l'emboîtement mâle-femelle, c'est une partie fixe 62b du dispositif d'obturation 62 de la canne 50, qui prend appui sur la partie mobile 56a du mécanisme d'ouverture 56 et la sollicite jusqu'à sa position d'ouverture.

La figure 8 permet de constater que la partie fixe 56b du mécanisme d'ouverture 56 comprend un obturateur 56b1 d'un orifice central 56a1 de la partie mobile 56a. Cet obturateur 56b1 est relié rigidement par une tige 56b2 à un support 56b3 fixe de la partie 56b.

Un ou plusieurs organes élastiques 60 s'étendent entre le support 56b3 et la partie mobile 56a pour la solliciter dans une position de repos dans laquelle l'obturateur 56b1 prend appui sur un épaulement 56a2 de l'orifice 56a1 qui forme un siège d'appui de l'obturateur et assure ainsi une fermeture étanche de l'interface 42. De préférence, l'interface 42 comprend un élément 64 de guidage et de verrouillage configuré pour coopérer par effet baïonnette avec un élément 66 complémentaire de l'embout 50a de la canne 50.

Dans l'exemple représenté aux figures 5 à 15, l'embout 54 de l'interface 42 comprend un ergot 65 destiné à coopérer par engagement et coulissement avec une rainure ou fente 66 en L de l'embout 50a de la canne 50. L'emboîtement des embouts est réalisé suivant un axe A et l'ergot 65 s'étend radialement vers l'intérieur, c'est-à-dire vers l'axe A depuis l'embout 54. On comprend donc que la fente 66 est située à la périphérie externe de l'embout 50a. Cette fente 66 comprend une portion longitudinale 66a débouchant sur l'extrémité libre de l'embout 50a et une portion latérale 66b qui est orientée circonférentiellement par rapport à l'axe A.

Lorsque les embouts 50a, 54 sont emboîtés l'un dans l'autre, l'ergot 65 est engagé et coulisse dans la portion longitudinale 66a de la fente jusqu'à atteindre la portion latérale de cette fente (flèche F1 - figure 9). La pression selon l'axe A exercée par la canne 50 sur l'interface 42 permet d'ouvrir les mécanismes 56, 62. La longueur de la portion 66a peut être dimensionnée de façon à ce que les mécanismes s'ouvrent qu'à la fin de la course de l'ergot 65 dans cette portion 66a. Dans cette position, les deux mécanismes sont donc ouverts, comme représenté à la figure 9, et une rotation de la canne 50 et donc de son embout 50a, dans l'embout 54 de l'interface 42, entraîne le coulissement de l'ergot 65 dans la portion latérale 66b de la fente 66 (flèche F2 - figure 10). Les embouts sont alors verrouillés dans la position d'emboîtement avec les mécanismes 56, 62 ouverts, et de l'huile peut être versée dans la canne 50 jusqu'au réservoir 40 en vue de son remplissage. Les organes élastiques 60, 64 restent comprimés par verrouillage mécanique.

De l'huile peut alors s'écouler dans la canne 50 jusqu'au réservoir 40 (flèches F3 - figure 10). Après remplissage du réservoir 40, les embouts sont désemboîtés l'un de l'autre en répétant les déplacements précités dans l'ordre inverse. La canne 50 et son embout 50a sont déplacés en rotation autour de l'axe A de façon à ce que l'ergot 65 coulisse dans la portion latérale 66b et atteigne la portion longitudinale 66a de la fente 66. Le raccordement est alors déverrouillé et les organes élastiques 60, 64 assurent le retour en position de repos des parties mobiles des mécanismes. La canne 50 est ensuite retirée par translation axiale et coulissement de l'ergot 65 dans la portion longitudinale 66a de la fente de façon à ce que l'obturateur 56b1 prenne appui sur l'épaulement 56a2 de la partie mobile 56a (figure 11). Si de l'huile résiduelle s'écoule dans la canne, elle est retenue par la fermeture étanche du mécanisme de l'embout de la canne.

Dans la variante représentée à la figure 16, l'ergot 65 est porté par l'embout 50a de la canne 50, et la fente 66 est alors formée sur l'embout de l'interface 42.

La présente invention concerne ainsi un procédé de remplissage d'un réservoir 40 de lubrifiant dans une turbomachine d'aéronef, comprenant plusieurs étapes parmi lesquelles :
- une étape d'ouverture de la trappe 46 de la nacelle 14 ;
- une étape d'insertion de la canne 50 à travers la trappe 46 puis à travers la seconde interface 42, comme représenté à la figure 6 ; la canne est alors guidée par le système de la seconde interface 42, qui se déploie de manière télescopique le long de la canne 50 et jusqu'au plus près de la première interface 44 ; l'élément 52a peut être équipé d'un clapet 53 qui comprend au moins un volet pivotant, chacun muni d'une liaison de type ressort pour le rappel vers la position fermée, et qui viendrait s'ouvrir sur simple pression de la canne 50 et se refermer au retrait de la canne ;
- une étape de passage de la canne 50 dans la veine d'écoulement du flux secondaire jusqu'à la première interface 44 en vue du raccordement de la canne 50 au réservoir 40 ;
- une étape d'écoulement de lubrifiant depuis l'extrémité proximale de la canne située à l'extérieur de la turbomachine jusqu'à l'extrémité distale de la canne et jusqu'au réservoir 40.

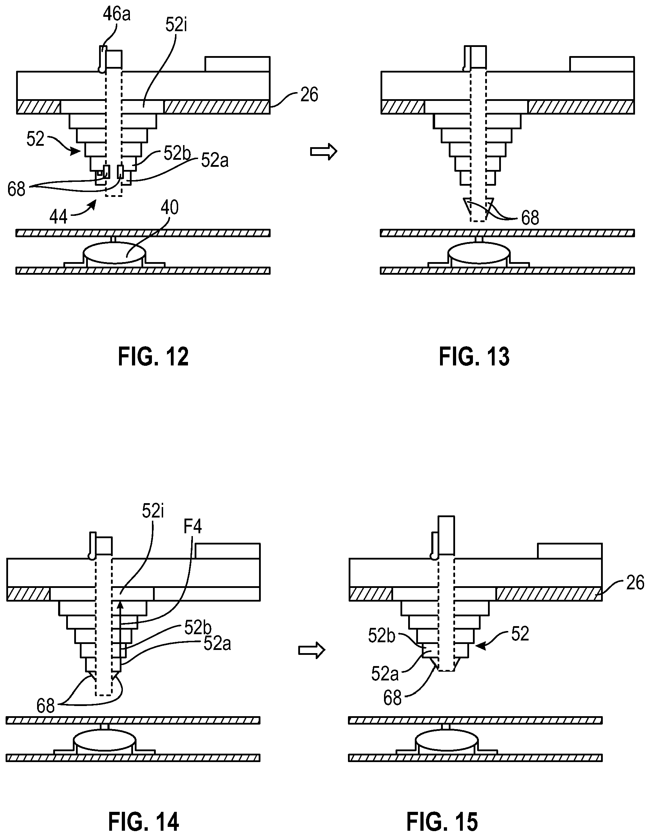

Les figures 12 à 15 illustrent des étapes suivantes de retrait de la canne 50, après remplissage du réservoir 40.

Avantageusement, lors du retrait de la canne 50 au niveau de l'interface 44, le système 52 se replie automatiquement, par le biais de la translation de la canne.

Pour cela, la canne 50 peut comprendre au moins un ou plusieurs organes 68 mobiles entre une position rétractée le long de la canne (figure 12), et une position déployée en saillie sur la canne (figures 13-15). Ces organes mobiles sont aptes à coopérer avec le système 50 afin de le forcer à se rétracter lors du retrait de la canne 50. Les organes 68 sont par exemple des ailettes.

Au fur et à mesure de la remontée de la canne 50 dans le système, les organes se mettent en butée de chacun des éléments 52a, 52b, ..., 52i, qui se replie dans l'élément supérieur (flèche F4). Le déplacement des organes 68est assuré par un moyen de commande situé à l'extrémité distale de la canne 50.

L'interface 44 sur le carter 26 retrouve alors son état initial (figure 5).

On se réfère désormais aux figures 18 à 20 qui illustrent une variante de réalisation de la turbomachine selon l'invention. Les éléments de la turbomachine qui ont déjà été décrits dans ce qui précède sont désignés par les mêmes références dans ce qui suit et dans les figures 18 à 20.

Dans cette variante, la première interface 44 est une simple ouverture 70 ménagée dans le carter 26.

Dans l'exemple représenté, la trappe 46 comprend un organe mobile 46b de fermeture de la trappe muni d'un obturateur 46c agencé pour fermer l'ouverture 70 quand la trappe est fermée. L'organe mobile 46b se présente sous la forme d'une paroi de fermeture de l'ouverture de la trappe 46 et est solidaire de l'obturateur 46c qui se présente sous la forme d'un doigt de forme allongée s'étendant sensiblement perpendiculairement depuis une surface intérieure de l'organe mobile 46b. Ce doigt comporte une extrémité libre opposée à l'organe mobile 46b, qui est configurée pour être engagée dans l'ouverture 70. L'extrémité libre du doigt a donc une forme complémentaire de celle de l'ouverture 70. L'organe 46b est mobile et en particulier amovible dans la mesure où il peut être démonté et retiré de la turbomachine, comme illustré à la figure 19.

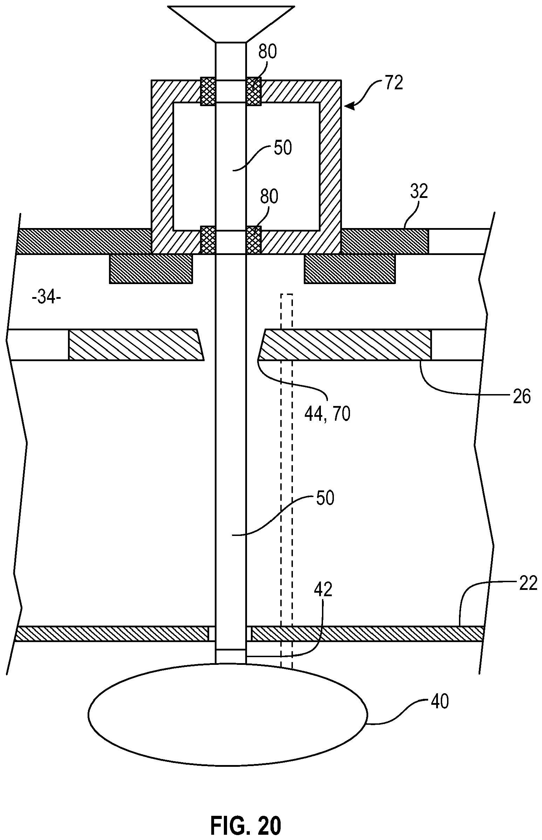

La canne 50 est similaire à celle décrite dans ce qui précède et est ici associée à un système de guidage 72 agencé pour être installé à l'emplacement de la trappe 46 une fois celle-ci ouverte, et pour être désinstallé une fois le réservoir 40 rempli. Le système 72 se présente sous la forme d'un boîtier 74 comportant deux parois 76 parallèles comportant des orifices 78 alignés de passage de la canne 50. Le boîtier 74 est monté dans l'ouverture de la trappe 46 après retrait de l'organe 46b, et la canne 50 est ensuite déplacée en coulissement à travers les orifices 78 qui peuvent être équipés de bagues anti-friction 80 ou analogues (figures 19 et 20).

Les figures 18 à 20 illustrent une caractéristique supplémentaire avantageuse qui peut également équiper la turbomachine décrite en référence au précédentes figures. Il s'agit d'une canalisation 82 de mise en communication fluidique de l'intérieur du réservoir 40 avec l'environnement extérieur de la turbomachine, particulièrement utile pour expulser vers l'extérieur de l'air du réservoir lors de son remplissage. Cela permet un passage continu de l'huile dans la canne sans avoir besoin que l'air chassé du réservoir par le remplissage en huile ressorte en sens inverse de l'huile par la canne, ainsi le débit de remplissage n'est pas compromis. Cette canalisation 82 s'étend depuis le réservoir 40 jusqu'au carter 26, et comprend une extrémité 84 qui débouche dans le compartiment nacelle 34 au niveau de l'ouverture de la trappe 46 de façon à ce que cette extrémité 84 soit mise à l'air libre au moins lorsque la trappe 46 est retirée (figure 19). Cette canalisation 82 peut être de faible diamètre (par exemple de quelques millimètres) et peut passer à travers un bras d'OGV ou de passage de servitudes entre les carters 22, 26. Dans l'exemple représenté, afin notamment que le réservoir 40 puisse être pressurisé lorsque la turbomachine est en fonctionnement, c'est-à-dire afin que la pression à l'intérieur du réservoir puisse être supérieure à la pression de l'environnement extérieur de la turbomachine, l'extrémité 84 de la canalisation 82 est prévue pour être obturée lorsque la trappe 46 est fermée. Pour cela, il peut être prévu que l'organe mobile 46b de la trappe 46 porte un bouchon 86 de fermeture étanche de l'extrémité 84 de la canalisation 82 (figure 18).

## Revendications

1. Turbomachine (10) à double flux, comprenant :
- un générateur de gaz (12),
- une nacelle (14) qui entoure le générateur de gaz,
- des bras (28) de liaison du générateur de gaz à la nacelle,
- une veine annulaire d'écoulement d'un flux primaire qui est formée dans le générateur de gaz et qui est délimitée extérieurement par un premier carter annulaire (20) du générateur de gaz,
- une veine annulaire d'écoulement d'un flux secondaire qui est formée entre le générateur de gaz et la nacelle et qui est délimitée intérieurement par un second carter annulaire (22) du générateur de gaz et extérieurement par un troisième carter annulaire (26) entouré par la nacelle, les deuxième et troisième carters étant reliés ensemble par au moins certains desdits bras,
- au moins un réservoir de lubrifiant (40) situé dans un espace annulaire s'étendant entre les premier et deuxième carters,
- au moins une trappe (46) prévue sur un capotage extérieur (32) de la nacelle, pour le remplissage dudit réservoir,
**caractérisée en ce que** ledit réservoir est configuré pour être rempli par l'intermédiaire d'une canne tubulaire (50) amovible insérée depuis ladite trappe jusqu'au réservoir, ledit troisième carter (26) comportant une première interface (44) configurée pour être traversée par ladite canne, et ledit deuxième carter comportant une seconde interface (42) de raccordement de la canne audit réservoir.

2. Turbomachine (10) selon la revendication précédente, dans laquelle lesdites première et seconde interfaces (42, 44) sont situées directement dans ladite veine d'écoulement du flux secondaire.

3. Turbomachine (10) selon la revendication précédente, dans laquelle ladite première interface (44) comprend un système (52) de guidage télescopique comportant plusieurs éléments (52a, 52b, ..., 52i) montés coaxialement et de manière coulissante les uns dans les autres, ce système étant apte à être traversé par la canne (50) et à adopter une première position rétractée dans laquelle il a une longueur ou épaisseur minimale et n'est pas en saillie dans la veine d'écoulement du flux secondaire, et une seconde position déployée dans laquelle il a une longueur ou épaisseur maximale et est en saillie dans la veine d'écoulement du flux secondaire en direction du second interface (42).

4. Turbomachine (10) selon l'une des revendications précédentes, dans laquelle ladite seconde interface (42) comprend un dispositif de raccordement comportant :
- un embout (54) configuré pour coopérer par emboîtement mâle-femelle avec un embout (50a) complémentaire d'une extrémité distale de la canne (50), et
- un mécanisme d'ouverture (56) du réservoir lorsque l'emboîtement est effectif.

5. Turbomachine (10) selon la revendication précédente, dans laquelle ledit mécanisme d'ouverture (56) comprend au moins une partie (56a) mobile depuis une position de fermeture jusqu'à une position d'ouverture du réservoir (40), la partie mobile étant sollicitée par un organe élastique (60) dans sa position de fermeture et étant amenée jusqu'à sa position d'ouverture par ledit emboîtement mâle-femelle.

6. Turbomachine (10) selon la revendication 4 ou 5, dans laquelle ladite seconde interface (42) comprend un élément (64) de guidage et de verrouillage configuré pour coopérer par effet baïonnette avec un élément (66) complémentaire de l'embout (50a) de la canne (50).

7. Turbomachine (10) selon l'une des revendications précédentes, dans laquelle la trappe (46) est située en amont de capots d'inverseur de poussée de la turbomachine.

8. Ensemble comportant une turbomachine (10) selon l'une des revendications précédentes et une canne tubulaire (50) amovible de remplissage du réservoir (40), cette canne étant configurée pour traverser ladite première interface (44) et pour être raccordée au réservoir (40) via ladite seconde interface (42).

9. Ensemble selon la revendication précédente, dans lequel la canne (50) comprend une extrémité distale équipée d'un embout (50a) configuré pour coopérer par emboîtement mâle-femelle avec un embout complémentaire (54) de la seconde interface (42), cet embout (50a) étant équipé d'un dispositif d'obturation (62) agencé pour ouvrir l'extrémité distale de la canne (50) lorsque cet emboîtement est effectif et pour fermer ladite extrémité distale lorsque ledit embout (50a) et ledit embout complémentaire (54) sont désemboîtés l'un de l'autre.

10. Ensemble selon la revendication 8 ou 9, la turbomachine (10) étant telle que définie à la revendication 3, dans lequel la canne (50) comprend au moins un organe (68) mobile entre une position rétractée le long de la canne, et une position déployée en saillie sur la canne, cet organe mobile étant apte à coopérer avec ledit système (52) afin de le forcer à se rétracter lors d'un retrait de la canne de la turbomachine.

11. Ensemble selon la revendication 8 ou 9, la turbomachine (10) étant telle que définie à la revendication 1 ou 2, dans lequel ladite première interface (44) est formée par une ouverture (70) ménagée dans ledit troisième carter (26), ladite trappe (46) comprend un organe mobile (46b) de fermeture de la trappe muni d'un obturateur (46c) agencé pour fermer ladite ouverture quand la trappe est fermée, et la canne (50) est associée à un système de guidage (72) agencé pour être installé à l'emplacement de la trappe (46) une fois celle-ci ouverte et pour être désinstallé une fois le réservoir (40) rempli.

12. Procédé de remplissage d'un réservoir de lubrifiant (40) dans une turbomachine d'aéronef, au moyen d'un ensemble selon l'une des revendications 8 à 11, dans laquelle il comprend les étapes de :
- ouverture de la trappe (46) de la nacelle (14),
- insertion de la canne (50) à travers la trappe (46) puis à travers la première interface (44),
- passage de la canne (50) dans la veine d'écoulement du flux secondaire jusqu'à la seconde interface (42) en vue du raccordement de la canne (50) au réservoir (40), et
- écoulement de lubrifiant depuis une extrémité proximale de la canne (50) située à l'extérieur de la turbomachine (10) jusqu'à une extrémité distale de la canne et jusqu'au réservoir (40).

## Patentansprüche

1. Doppelstromturbomaschine (10), umfassend:
- einen Gasgenerator (12),
- eine Gondel (14), die den Gasgenerator umgibt,
- Arme (28) zur Verbindung des Gasgenerators mit der Gondel,
- eine ringförmige Abflussader für einen primären Strom, die im Gasgenerator gebildet ist und die auf der Außenseite von einem ersten ringförmigen Gehäuse (20) des Gasgenerators begrenzt ist,
- eine ringförmige Abflussader für einen sekundären Strom, die zwischen dem Gasgenerator und der Gondel gebildet ist und die auf der Innenseite von einem zweiten ringförmigen Gehäuse (22) des Gasgenerators und auf der Außenseite von einem dritten ringförmigen Gehäuse (26), das von der Gondel umgeben ist, begrenzt ist, wobei das zweite und das dritte Gehäuse durch mindestens einige der Arme miteinander verbunden sind,
- mindestens einen Schmiermitteltank (40), der sich in einem ringförmigen Raum befindet, der sich zwischen dem ersten und dem zweiten Gehäuse erstreckt,
- mindestens eine Falltür (46), die auf einer äußeren Verkleidung (32) der Gondel vorgesehen ist, zur Füllung des Tanks,
**dadurch gekennzeichnet, dass** der Tank konfiguriert ist, um mithilfe eines abnehmbaren rohrförmigen Rohrs (50) gefüllt zu werden, das ausgehend von der Falltür bis zum Tank eingeführt wird, wobei das dritte Gehäuse (26) eine erste Grenzschicht (44) umfasst, die konfiguriert ist, um von dem Rohr durchquert zu werden, und das zweite Gehäuse eine zweite Grenzschicht (42) zum Anschluss des Rohrs an den Tank umfasst.

2. Turbomaschine (10) nach dem vorstehenden Anspruch, wobei sich die erste und die zweite Grenzschicht (42, 44) direkt in der Abflussader des sekundären Stroms befinden.

3. Turbomaschine (10) nach dem vorstehenden Anspruch, wobei die erste Grenzschicht (44) ein System zur teleskopischen Führung umfasst, das mehrere koaxial und zueinander verschiebbar angebrachte Elemente (52a, 52b, ..., 52i) umfasst, wobei dieses System geeignet ist, von dem Rohr (50) durchquert zu werden und eine erste, eingezogene Position, in der es eine minimale Länge oder Dicke aufweist und nicht in die Abflussader des sekundären Stroms vorsteht, und eine zweite, ausgebreitete Position, in der es eine maximale Länge oder Dicke aufweist und in die Abflussader des sekundären Stroms in Richtung der zweiten Grenzschicht (42) vorsteht, einzunehmen.

4. Turbomaschine (10) nach einem der vorstehenden Ansprüche, wobei die zweite Grenzschicht (42) eine Anschlussvorrichtung umfasst, die Folgendes umfasst:
- ein Endstück (54), das konfiguriert ist, um durch eine männlich-weibliche Einpassung mit einem komplementären Endstück (50a) eines distalen Endes des Rohrs (50) zusammenzuwirken; und
- einen Öffnungsmechanismus (56) des Tanks, wenn die Einpassung zur Wirkung kommt.

5. Turbomaschine (10) nach dem vorstehenden Anspruch, wobei der Öffnungsmechanismus (56) mindestens einen ausgehend von der Verschlussposition bis zu einer Öffnungsposition des Tanks (40) beweglichen Teil (56a) umfasst, wobei der bewegliche Teil durch ein elastisches Organ (60) in seiner Verschlussposition beansprucht wird und durch die männlich-weibliche Einpassung bis zu seiner Öffnungsposition gebracht wird.

6. Turbomaschine (10) nach Anspruch 4 oder 5, wobei die zweite Grenzschicht (42) ein Element (64) zur Führung und zur Verriegelung umfasst, das konfiguriert ist, um durch Bajonett-Wirkung mit einem komplementären Element (66) des Endstücks (50a) des Rohrs (50) zusammenzuwirken.

7. Turbomaschine (10) nach einem der vorstehenden Ansprüche, wobei sich die Falltür (46) stromaufwärts von Schubumkehrkappen der Turbomaschine befindet.

8. Baugruppe, die eine Turbomaschine (10) nach einem der vorstehenden Ansprüche und ein abnehmbares rohrförmiges Rohr (50) zur Füllung des Tanks (40) umfasst, wobei dieses Rohr konfiguriert ist, um die erste Grenzschicht (44) zu durchqueren und über die zweite Grenzschicht (42) an dem Tank (40) angeschlossen zu werden.

9. Baugruppe nach dem vorstehenden Anspruch, wobei das Rohr (50) ein distales Ende umfasst, das mit einem Endstück (50a) ausgestattet ist, das konfiguriert ist, um durch männlich-weibliche Einpassung mit einem komplementären Endstück (54) der zweiten Grenzschicht (42) zusammenzuwirken, wobei dieses Endstück (50a) mit einer Stopfvorrichtung (62) ausgestattet ist, die eingerichtet ist, um das distale Ende des Rohrs (50) zu öffnen, wenn diese Einpassung zur Wirkung kommt, und um das distale Ende zu schließen, wenn das Endstück (50a) und das komplementäre Endstück (54) voneinander gelöst sind.

10. Baugruppe nach Anspruch 8 oder 9, wobei die Turbomaschine (10) wie in Anspruch 3 definiert ist, wobei das Rohr (50) mindestens ein zwischen einer entlang des Rohrs eingezogenen Position und einer auf dem Rohr vorstehend ausgebreiteten Position bewegliches Organ (68) umfasst, wobei dieses bewegliche Organ geeignet ist, mit dem System (52) zusammenzuwirken, um es zu zwingen, sich bei einer Entnahme des Rohrs aus der Turbomaschine zusammenzuziehen.

11. Baugruppe nach Anspruch 8 oder 9, wobei die Turbomaschine (10) wie in Anspruch 1 oder 2 definiert ist, wobei die erste Grenzschicht (44) durch eine im dritten Gehäuse (26) eingerichtete Öffnung (70) gebildet ist, wobei die Falltür (46) ein bewegliches Organ (46b) zum Schließen der Falltür umfasst, das mit einem Stopfen (46c) versehen ist, der eingerichtet ist, um die Öffnung zu schließen, wenn die Falltür geschlossen ist, und das Rohr (50) einem Führungssystem (72) zugeordnet ist, das eingerichtet ist, um an der Stelle der Falltür (46) eingebaut zu werden, sobald diese offen ist, und um ausgebaut zu werden, sobald der Tank (40) gefüllt ist.

12. Verfahren zur Füllung eines Schmiermitteltanks (40) in einer Turbomaschine eines Luftfahrzeugs mittels einer Baugruppe nach einem der Ansprüche 8 bis 11, wobei es die folgenden Schritte umfasst:
- Öffnung der Falltür (46) der Gondel (14),
- Einführung des Rohrs (50) durch die Falltür (46), dann durch die erste Grenzschicht (44) hindurch,
- Durchführung des Rohrs (50) in die Abflussader des sekundären Stroms bis zur zweiten Grenzschicht (42) für den Anschluss des Rohrs (50) an den Tank (40), und
- Abfluss von Schmiermittel ausgehend von einem proximalen Ende des Rohrs (50), das sich auf der Außenseite der Turbomaschine (10) befindet, bis zu einem distalen Ende des Rohrs und bis zum Tank (40).

## Claims

1. A dual flow turbine engine (10), comprising:
- a gas generator (12),
- a nacelle (14) which surrounds the gas generator,
- arms (28) for connecting the gas generator to the nacelle,
- an annular duct for the flow of a primary flow, the duct being formed in the gas generator and being externally delimited by a first annular casing (20) of the gas generator,
- an annular duct for the flow of a secondary flow, the duct being formed between the gas generator and the nacelle and being delimited internally by a second annular casing (22) of the gas generator and externally by a third annular casing (26) surrounded by the nacelle, the second and third casings being connected together by at least some of said arms,
- at least one lubricant tank (40) located in an annular space extending between the first and second casings,
- at least one hatch (46) provided on an outer cowling (32) of the nacelle, for filling said tank,
**characterised in that** said tank is configured to be filled by means of a removable tubular pipe (50) inserted from said hatch to the tank, said third casing (26) comprising a first interface (44) configured to be passed through by said pipe, and said second casing comprising a second interface (42) for connecting the pipe to said tank.

2. The turbine engine (10) according to the preceding claim, wherein said first and second interfaces (42, 44) are located directly in said duct for the flow of the secondary flow.

3. The turbine engine (10) according to the preceding claim, wherein said first interface (44) comprises a telescopic guiding system (52) comprising a plurality of elements (52a, 52b, ..., 52i) mounted coaxially and slidably one inside the other, this system being adapted to be passed through by the pipe (50) and to adopt a first retracted position in which it has a minimum length or thickness and does not project into the duct for the flow of the secondary flow, and a second extended position in which it has a maximum length or thickness and projects into the duct for the flow of the secondary flow towards the second interface (42).

4. The turbine engine (10) according to any of the preceding claims, wherein said second interface (42) comprises a connection device comprising:
- an end-piece (54) configured to cooperate by male-female nesting with a complementary end-piece (50a) on a distal end of the pipe (50), and
- a mechanism (56) for opening the tank when the nesting is effective.

5. The turbine engine (10) according to the preceding claim, wherein said opening mechanism (56) comprises at least one portion (56a) movable from a closed position to an open position of the tank (40), the movable portion being biased by an elastic member (60) into its closed position and being brought to its open position by said male-female nesting.

6. The turbine engine (10) according to claim 4 or 5, wherein said second interface (42) comprises a guiding and locking element (64) configured to cooperate by bayonet effect with an element (66) complementary to the end-piece (50a) on the pipe (50).

7. The turbine engine (10) according to any of the preceding claims, wherein the hatch (46) is located upstream of thrust reverser covers of the turbine engine.

8. An assembly comprising a turbine engine (10) according to one of the preceding claims and a removable tubular pipe (50) for filling the tank (40), this pipe being configured to pass through said first interface (44) and to be connected to the tank (40) via said second interface (42).

9. The assembly according to the preceding claim, wherein the pipe (50) comprises a distal end equipped with an end-piece (50a) configured to cooperate by male-female nesting with a complementary end-piece (54) of the second interface (42), this end-piece (50a) being equipped with a shutter device (62) arranged to open the distal end of the pipe (50) when this nesting is effective and to close said distal end when said end-piece (50a) and said complementary end-piece (54) are disengaged from each other.

10. The assembly according to claim 8 or 9, the turbine engine (10) being as defined in claim 3, wherein the pipe (50) comprises at least one member (68) movable between a retracted position along the pipe, and an extended position projecting from the pipe, this movable member being adapted to cooperate with said system (52) in order to force it to retract when the pipe is removed from the turbine engine.

11. The assembly according to claim 8 or 9, the turbine engine (10) being as defined in claim 1 or 2, wherein said first interface (44) is formed by an opening (70) provided in said third casing (26), said hatch (46) comprises a movable member (46b) for closing the hatch equipped with a shutter (46c) arranged to close said opening when the hatch is closed, and the pipe (50) is associated with a guiding system (72) arranged to be installed at the location of the hatch (46) once the latter is open and to be uninstalled once the tank (40) is filled.

12. A method for filling a lubricant tank (40) in an aircraft turbine engine, by means of an assembly according to any of claims 8 to 11, wherein it comprises the steps of:
- opening the hatch (46) of the nacelle (14),
- inserting the pipe (50) through the hatch (46) and then through the first interface (44),
- passing the pipe (50) through the duct for the flow of the secondary flow to the second interface (42) for connecting the pipe (50) to the tank (40), and
- flowing lubricant from a proximal end of the pipe (50) located outside the turbine engine (10) to a distal end of the pipe and to the tank (40).
